# NEW EUROPEAN PATENT SPECIFICATION

(11) **EP 3 930 484 B2**
(45) Date of publication and mention of the opposition decision: **28.10.2026**
(45) Mention of the grant of the patent: 07.06.2023
(21) Application number: 20702031.4
(22) Date of filing: 31.01.2020
(51) Int. Cl.: A23L 33/18, A23J 3/14, A23J 3/22, A23L 33/185, A23L 13/40, A23L 13/60

(54) **EDIBLE COMPOSITION COMPRISING A STRUCTURED AQUEOUS PHASE**
ESSBARE ZUSAMMENSETZUNG MIT EINER STRUKTURIERTEN WÄSSRIGEN PHASE
COMPOSITION COMESTIBLE COMPRENANT UNE PHASE AQUEUSE STRUCTURÉE

(30) Priority: 26.02.2019 EP 19159493
(43) Date of publication of application: 05.01.2022
(73) Proprietor: Vivera Topholding B.V., 7451 PJ Holten (NL)
(72) Inventor: MELLEMA, Michel, 6708 WH Wageningen (NL); KOPPERT, Remco, Johannes, 6708 WH Wageningen (NL); FLENDRIG, Leonardus, Marcus, 6708 WH Wageningen (NL)
(74) Representative: V.O.
(86) International application number: PCT/EP2020/052423
(87) International publication number: WO 2020/173660

(56) References cited:
- WO-A1-2008/069650
- WO-A1-2017/070303
- WO-A1-2017/153931
- WO-A1-2017/171601
- WO-A1-2018/177717
- WO-A2-2004/049819
- WO-A2-2009/082229
- WO-A2-2015/187817
- US-A1- 2011 144 006
- US-A1- 2017 196 243
- Priority document
- MIROLJUB BARAĆ; SLAVICA ČABRILO; MIRJANA PEŠIĆ; SLAĐANA STANOJEVIĆ; MILICA PAVLIĆEVIĆ; OGNJEN MAĆEJ; NIKOLA RISTIĆ: "Functional Properties of Pea (Pisum sativum, L.) Protein Isolates Modified with Chymosin", INTERNATIONAL JOURNAL OF MOLECULAR SCIENCES, vol. 12, no. 12, 1 January 2011 (2011-01-01), pages 8372 - 8387, XP055270647, DOI: 10.3390/ijms12128372
- SUN, X.D. ; ARNTFIELD, S.D.: "Gelation properties of salt-extracted pea protein induced by heat treatment", FOOD RESEARCH INTERNATIONAL, vol. 43, no. 2, 1 March 2010 (2010-03-01), AMSTERDAM, NL , pages 509 - 515, XP026881636, ISSN: 0963-9969, DOI: 10.1016/j.foodres.2009.09.039
- OPAZO-NAVARRETE MAURICIO; ALTENBURG MARTE D.; BOOM REMKO M.; JANSSEN ANJA E.: "The Effect of Gel Microstructure on Simulated Gastric Digestion of Protein Gels", FOOD BIOPHYSICS, vol. 13, no. 2, 5 March 2018 (2018-03-05), Boston , pages 124 - 138, XP036495416, ISSN: 1557-1858, DOI: 10.1007/s11483-018-9518-7
- SUDARSHAN R. NADATHUR, JANITHA P.D. WANASUNDARA, LAURIE SCANLIN: "Sustainable Protein Sources", 1 January 2017, NIKKI LEVY, ISBN: 978-0-12-802778-3, article ANONYMOUS: "Chapter 9 Pea: A Sustainable Vegetable Protein Crop", pages: 161 - 161, XP093172650
- HARKEMA JAAP: "Potato Proteins: "Free From" Texture & Nutrition", BRIDGE2FOOD 9TH FOOD PROTEINS COURSE, 18 March 2015 (2015-03-18), pages 1 - 27, XP093172665
- DE VOS ANIEK: "Rheological measurements", RHEOLOGY REPORT, 5 March 2024 (2024-03-05), pages 1 - 2, XP093172669
- DE VOS ANIEK : "Texture analyzer measurements", TEXTURE ANALYZER REPORT, 5 March 2024 (2024-03-05), pages 1 - 3, XP093172671
- Vivera declaration
- Vivera schnitzel review
- SANDRA : "Review | Vivera Zigeuner Schnitzel", AROUNDSAN, 7 February 2018 (2018-02-07), pages 1 - 8, XP093172674
- Veganz invoice
- Quorn ultimate introduction
- "Quorn Launches Ultimate 'Bleeding' Burger", VEGCONOMIST, 26 March 2019 (2019-03-26), pages 1 - 5, XP093172677, Retrieved from the Internet <URL:https://vegconomist.com/top-stories/quorn-launches-ultimate-bleeding-burger/> [retrieved on 20240610]
- Beyond Meat analysis
- S200 product sheet
- Gaebler
- Gaebler analysis
- Experimental Report Aug 2024 showing synergistic effects between patatin on the one hand and other legume proteins (soy, faba bean and lupin protein).
- Chapter 5 Potato Proteins, Lipids, and Minerals, Kärenlampi and White, 2009, p 99-103 Advances in potato chemistry and technology.
- print from www.roquette.com showing that NUTRALYS® F85M has at least 83% protein

## Description

### TECHNICAL FIELD OF THE INVENTION

The invention relates to an edible composition comprising at least 5 wt.% of a structured aqueous phase containing at least 5 wt.% of a combination of denatured patatin and legume seed globulin.

The invention further relates to a method of preparing such an edible composition by combining an aqueous liquid with undenatured patatin and undenatured legume seed globulin, followed by heating to a temperature of at least 55°C.

### BACKGROUND OF THE INVENTION

The use of vegetable proteins in food products, as an alternative to animal proteins, is a subject of growing interest. Legume seed proteins, besides their nutritional properties, offer favourable functional properties, such as the capability of forming a gel structure in water. The main requirement for the formation of a gel structure is the unfolding of the legume seed globular protein. During thermal denaturation, the native protein conformation becomes unfolded, exposing the functional groups (such as sulfhydryl or hydrophobic groups). Formation of disulphide bonds and hydrophobic interactions cause protein aggregation. If the protein concentration is above its critical gelling point, aggregation will lead to formation of a gel structure. Examples of legume seed proteins that are capable of forming aqueous gels include soy protein, lupin protein and pea protein.

The major legume seed storage proteins are commonly referred to as 'globulins' because they are salt-soluble at neutral pH. This distinguishes them clearly from the major seed storage proteins of cereals such as wheat, barley and rye, which are insoluble in salt solution and are termed 'prolamins'. Legume seed globulins can be divided into two distinct classes, termed 7S and 11S on the basis of their sedimentation coefficients. Other seed proteins have also been accredited with a storage function, e.g. pea albumin. The legume seed globulins 7S and 11S are also referred to as vicilin-type and legumin-type, respectively.

O'Kane (Molecular characterisation and heat-induced gelation of pea vicilin and legumin, thesis, Wageningen University, the Netherlands (2004)) describes the isolation of two vicilin fractions from pea and the gelation behaviour of these fractions under various conditions of pH and ionic strength. Also investigated were the forces that produce pea legumin gels with different gel strengths (measured using small deformation rheology).

Patatin is a glycoprotein found in potatoes (*Solanum tuberosum*). The main function of patatin is as a storage protein but it also has lipase activity and can cleave fatty acids from membrane lipids. The patatin protein makes up about 40% of the soluble protein in potato tubers.

Creusot et al. (Rheological properties of patatin gels compared with β-lactoglobulin, ovalbumin, and glycinin, J Sci Food Agric. 2011 Jan 30;91(2):253-61) report that patatin was found to form gels with comparable small-deformational rheological properties as typical food proteins and that, at concentrations where the elastic modulus was similar for all proteins, the frequency and strain dependence were also comparable. The authors conclude that patatin is a promising protein to be used in food applications as a gelling agent,

US 2008/0118607 describes a process for producing an emulsified meat product, the process comprising:
- extruding a plant protein material under conditions of elevated temperature and pressure to form a structured plant protein product comprising protein fibres that are substantially aligned, wherein the plant protein material is selected from the group consisting of legumes, corn, peas, canola, sunflowers, sorghum, rice, amaranth, potato, tapioca, arrowroot, canna, lupin, rape, wheat, oats, rye, barley, and mixtures thereof; and
- combining the structured plant protein product with an animal meat to form an emulsified meat product.

US 2017/0196243 describes a liquid nutritional composition comprising:
- carbohydrate, and
- a protein system, wherein the protein system comprises potato protein in an amount of 20 to 100% by weight of the total protein, and a non-potato protein in an amount of 0 to 80% by weight of the total protein, and
wherein the liquid nutritional composition is substantially clear.

Example 1 describes a nutritional shake containing potato protein (0.989 wt.%) and soy protein (0.337 wt.%).

US 2011/0144006 describes a protein composition for affecting the insulin levels in a subject comprising at least 76% (w/v) of proteins from at least one vegetable source and at least 0.2% of at least one free amino acid. The examples describe protein composition containing a combination of 40 wt.% potato protein and 40 wt.% pea protein or 26 wt.% potato protein and 43.2 wt.% pea protein. The protein composition can be used to prepare a drink by mixing 30 grams of the protein composition with 500 ml water.

US 2011/0305798 describes a powder having a combined amino acid profile that reflects the amino acid profile of human mother's milk protein. The examples describe a powder containing 43.2 wt.% pea protein, 25.9 wt.% potato protein and 12.9 wt.% soy protein as well as a powder containing 49.4 wt.% pea protein and 20.6 wt.% potato protein.

US 2017/0042209 describes a composition for use as meal replacement comprising administering to a subject a composition comprising Sacha inchi protein, pea protein, rice protein and potato protein in an amount effective to maintain healthy body weight and lean body mass. The composition may be provided in the form of a beverage and preferably contains 5-10 grams of pea protein and 5-10 grams of potato protein.

WO 2017/171601 A1 describes a process for producing an enhanced viscosity oat base by providing a mixture of de-amidated oat base and vegetable protein isolate and crosslinking of glutamine and lysine units of the protein isolate by means of transglutaminase.

WO 2009/082229 A2 describes a peptide pre-fibril composition obtainable by the hydrolysis of a protein selected from the group consisting of 6-lactoglobulin-containing whey protein preparation, glycinin- containing soy bean protein preparation, patatin, and mixtures thereof.

WO 2018/177717 A1 describes an uncooked meat analogue comprising:
- at least 50 wt.% of proteinaceous fibres comprising, by weight of the proteinaceous fibres, 40-80 wt.% of water and 5-50 wt.% protein selected from dairy protein, egg protein, plant protein, fungal protein and combinations thereof;
- 0-40 wt.% of edible particulate ingredients;
- 2-20 wt.% of interstitial aqueous gelling composition; wherein the interstitial aqueous gelling composition comprises xanthan gum, galactomannan and water.

### SUMMARY OF THE INVENTION

The inventors have unexpectedly discovered that combinations of (i) patatin and (ii) legume seed globulins 7S and/or 11S are capable of forming aqueous gels at relatively low protein concentrations.

Thus, the present invention relates to an edible composition comprising at least 5 wt.% of a structured aqueous phase containing a combination of patatin and legume seed globulins 7S and 11S, said structured aqueous phase containing;
- 60-94 wt.% water;
- 1-15 wt.% of denatured patatin;
- 1-15 wt.% of legume seed globulin selected from 7S globulin, 11S globulin and combinations thereof;
wherein the combination of denatured patatin and the legume seed globulin is present in the structured aqueous phase in a concentration of at least 5 wt.%.

Furthermore, the invention provides a method of preparing such an edible composition, said method comprising combining an aqueous liquid with undenatured patatin and undenatured legume seed globulin, followed by heating to a temperature of at least 55°C.

### DETAILED DESCRIPTION OF THE INVENTION

A first aspect of the invention relates to edible composition comprising at least 5 wt.% of a structured aqueous phase containing a combination of patatin and legume seed globulin, said structured aqueous phase containing;
- 60-94wt.% water;
- 1-15 wt.% of denatured patatin;
- 1-15 wt.% of legume seed globulin selected from 7S globulin, 11S globulin and combinations thereof;
wherein the combination of denatured patatin and the legume seed globulin is present in the structured aqueous phase in a concentration of at least 5 wt.%.

The term "structured aqueous phase" as used herein refers to an aqueous phase comprising a three-dimensional network that contains at least one of the legume seed globulins 7S and 11S. Particles that are dispersed in the structured aqueous phase and that have a volume of more than 0.1 µm³ are not considered to be part of the structured aqueous phase.

The term "legume seed" as used herein refers to the seed of a plant belonging to the family *Fabaceae.* Well-known legumes include alfalfa, clover, peas, chickpeas, lentils, lupin bean, mesquite, carob, soybeans, peanuts and tamarind.

The term "7S globulin" as used herein refers to proteins that are found in legume seeds, that are soluble in dilute salt solutions and have sedimentation coefficients of 7-8S. The 7S globulins are typically found as trimers with an apparent molecular mass of 150 to 190 kDa, each of the subunits having a molar mass of approximately 50-70 kDa. The subunits are associated by via hydrophobic and hydrogen bonded interactions without the contribution of disulphide bonds. Denaturation of 7S globulin typically occurs at a temperature in the range of 71 to 83°C. The thermal denaturation temperature of 7S globulin is affected, for instance, by ionic strength.

The term "11S globulin" as used herein refers to proteins that are found in legume seeds, that are soluble in dilute salt solutions and have sedimentation coefficients of 11-12S. 11S globulins are typically isolated from legume seeds as hexamers of 300-450 kDa. Each of these subunits is made up of an acidic polypeptide of approximately 30-40 kDa and a basic polypeptide of approximately 20 kDa, linked together by disulphide bonds. Denaturation of 11S globulin typically occurs at a temperature of above 85°C.

The term "patatin" as used herein refers to the water-soluble glycoprotein found in potatoes *(Solanum tuberosum*). Patatins typically have a molecular mass of 40-42 kDa and an isoelectric point of about 5. At neutral pH and ambient temperature patatin exists as a dimer held together by non-covalent hydrophobic interactions. Patatin typically denatures at a temperature in the range of 55-60°C.

The term "denatured" as used herein in relation to proteins refers to proteins that have undergone tertiary structure disruption.

Weight percentages are provided with respect to the total weight of the edible composition, unless otherwise specified.

Examples of edible compositions encompassed by the present invention include (reconstitutable) meat replacers, protein drinks, desserts, dressings, soups, binders for fruit, nuts, and cereal bars.
65-94 wt.%,

The water content of the structured aqueous phase preferably is in the range of more preferably in the range of and most preferably in the range of 70-94%wt.%.
68-94wt. %

The legume seed globulin selected from 7S globulin, 11S globulin and combinations thereof preferably is contained in the structured aqueous phase in a concentration of 2-13 wt.%, more preferably in a concentration of 3-12 wt.% and most preferably in a concentration of 4-10 wt.%.

Typically, the structured aqueous phase contains 0.5-9 wt.%, more preferably 1-8 wt.% and most preferably 2-7 wt.% of legume seed 7S globulin.

Legume seed 11S globulin is preferably contained the structured aqueous phase in a concentration of 0.4-7 wt.%, more preferably of 0.8-6 wt.% and most preferably of 1.5-5 wt.%.

The synergistic interaction between denatured patatin and legume seed globulins is observed both for both undenatured and denatured legume seed globulins. However, synergy is most pronounced in case also the legume seed globulins are denatured. Accordingly, in a particularly preferred embodiment, the structured aqueous phase contains at least 1 wt.%, more preferably at least 2 wt.%, even more preferably at least 3 wt.% and most preferably at least 5 wt.% denatured legume seed globulins selected from denatured 7S globulin, denatured 11S globulin and combinations thereof.

Denatured patatin is preferably contained in the structured aqueous phase in a concentration of 2-14 wt.%, more preferably in a concentration of 3-12 wt.% and most preferably in a concentration of 4-10 wt.%.

According to a particularly preferred embodiment, the combination of the denatured legume seed globulin and denatured patatin is present in the structured aqueous phase in a concentration of 6-28 wt.%, more preferably of 7-25 wt.% and most preferably of 8-20 wt.%.

Besides the denatured legume seed globulin and denatured patatin, the structured aqueous phase may suitably contain one or more gelling agents and/or thickeners. The addition of such gelling agents and/or thickeners may be advantageous as it can reduce the amount of legume seed globulin and patatin that is required to achieve sufficient water structuring.

According to a preferred embodiment, the structured aqueous phase contains 0.1-8 wt.%, more preferably 0.5-5 wt.%, and most preferably 0.7-3 wt.% water-insoluble plant fibres.

Preferably, the water-insoluble plant fibres have been isolated from legume, grain, citrus peel, sugar beet, or from stem material from sugar cane, wheat, oat or bamboo. More preferably, the water-soluble plant fibres have been isolated from pea, citrus peel or sugar beet. Most preferably, the water-insoluble plant fibres have been isolated from pea.

Denatured patatin and the legume seed globulin are preferably present in the structured aqueous phase in a weight ratio of 4:1 to 1:4, more preferably in a weight ratio of 2:1 to 1:2 and most preferably in a weight ratio of 2:3 to 3:2.

In another preferred embodiment, neither the denatured patatin nor the legume seed globulin in the structure aqueous phase has been cross-linked by transglutaminase treatment. Even more preferably, neither of these proteins has been cross-linked.

The structured aqueous phase of the edible composition preferably has a pH in the range of 6.0 to 8.5. More preferably, the edible composition has a pH in the range of 6.1 to 8.0, most preferably in the range of 6.2 to 7.5

According to a particularly preferred embodiment, the structured aqueous phase contains 0.1-15 wt.%, more preferably 0.25-8 wt.% and most preferably 0.5-3 wt.% dissolved alkali chloride salt. The alkali chloride salt is preferably selected from sodium chloride, potassium chloride and combinations thereof.

The structured aqueous phase preferably constitutes 10-100 wt.%, more preferably 20-85 wt.% and most preferably 30-70 wt.% of the edible composition.

According to a particularly preferred embodiment, the structured aqueous phase is a gelled aqueous phase, wherein the gel network contains patatin.

Besides the structured aqueous phase, the edible composition of the present invention may suitably contain one or more other phases that do not mix with the structured aqueous phase. An example of such another phase is a fat phase, e.g. a dispersed fat phase. In accordance with an advantageous embodiment, the edible composition is an oil-in-water emulsion wherein the continuous aqueous phase is formed by the structured aqueous phase. The structured aqueous phase prevents coalescence of the dispersed fat phase and thus stabilises the oil-in-water emulsion. Examples of oil-in-water emulsions encompassed by the present invention include (reconstitutable) meat replacers, protein drinks, desserts, mayonnaise, dressings, sauces, and soups.

In accordance with a preferred embodiment, the edible composition contains 1-82 wt.%, more preferably 2-40 wt.% and most preferably 3-20 wt.% of dispersed fat phase.

Typically, the combination of the structured aqueous phase and the fat phase constitutes at least 20 wt.%, more preferably at least 30 wt.% and most preferably 40-100 wt.% of the edible composition.

In accordance with a further particularly preferred embodiment, the edible composition is a sausage comprising 45-97 wt.% of the structured aqueous phase, 2-40 wt.% of dispersed oil phase, and 1-20 wt.% of dispersed solid or semi-solid particles of edible material other than oil. Even more preferably, the sausage comprises 50-90 wt.% of the structured aqueous phase, 5-35 wt.% of dispersed oil phase, and 5-20 wt.% of dispersed solid or semi-solid particles of edible material other than oil.

Besides the structured aqueous phase, the edible composition of the present invention may suitably contain a separate phase in the form of solid or semi-solid particles or fibres whose dry matter is largely composed of proteins and/or polysaccharides. Preferably, at least 60 wt.%, more preferably at least 70 wt.% and most preferably at least 80 wt.% of the dry matter contained in the aforementioned particles or fibres is composed of protein and/or polysaccharides.

In accordance with a particularly preferred embodiment, besides the structured aqueous phase, the edible composition of the present invention contains at least 10 wt.%, more preferably at least 20 wt.% and most preferably 30-90 wt.% of hydrated textured vegetable protein (TVP) fibres, said TVP fibres containing at least 50 wt.% protein by weight of dry matter. The structured aqueous phase can act as a binder that holds together the hydrated TVP fibres and that imparts a juicy mouthfeel. Typically, the water content of the hydrated TVP fibres is in the range of 20 to 80 wt.%, more preferably in the range of 50 to 75 wt.%.

The protein component of the aforementioned protein fibres preferably contains at least 40 wt.%, more preferably at least 60 wt.%, and most preferably at least 80 wt.% of plant protein selected from pea protein, lupin protein, rice protein, wheat protein and combinations thereof.

According to a particularly preferred embodiment, the edible composition of the present invention is a meat replacer product. Examples of meat replacer products that may suitably comprise a structured aqueous phase according to the present invention include vegan and vegetarian alternatives of burgers, meat balls, schnitzels, cordon bleu, fish fingers, chicken nuggets, roulade, corned beef, sausages, and cold cuts.

A preferred embodiment of a meat replacer product according to the present invention contains 30-65 wt.% of the structured aqueous phase and 10-70 wt.% of hydrated TVP fibres, said hydrated TVP fibres containing 40-90 wt.% of plant protein and 20-75 wt.% water, said plant protein preferably being selected from pea protein, lupin protein, rice protein, wheat protein (gluten), and combinations thereof.

The legume seed globulin is preferably introduced in the edible composition of the present invention in the form of a highly purified protein isolate having a low content of starch and legume seed albumin. Accordingly, in a preferred embodiment, the structured aqueous phase contains 0-20%, more preferably 0-15% and most preferably 0-10% legume seed albumin by weight of the legume seed globulin.

The structured aqueous phase of the edible composition preferably contains less than 10 wt.% starch. More preferably, the starch content of the structured aqueous phase is less than 5 wt.%, most preferably less than 2 wt.%.

The denatured legume seed globulin in the structured aqueous phase is preferably obtained from a legume selected from pea (*Pisum sativum*), soybean, lupin, peanut, French bean and broad bean. More preferably, the denatured legume seed globulin is obtained from pea and/or lupin. Most preferably, the denatured legume seed globulin is obtained from pea.

The denatured patatin employed in accordance with the present invention most preferably is denatured potato patatin.

A further aspect of the invention relates to a reconstitutable meat replacer product comprising:
- 2-35 wt.% of undenatured patatin;
- 2-35 wt.% of undenatured legume seed globulin selected from undenatured 7S globulin, undenatured 11S globulin and combinations thereof;
- 20-65 wt.% textured vegetable protein (TVP) fibres;
- 5-50 wt.% oil;
- 2-12 wt.% salt; and
- 0-15 wt.% water.

According to a particularly preferred embodiment, the reconstitutable meat replacer product comprises 0.5-20 wt.%, more preferably 0.8-10 wt.% herbs and/or spices.

The term "reconstitutable" as used herein refers to an edible composition (e.g. meat replacer product) comprising 0-15 wt.% water, to which an aqueous liquid may be added, preferably by the consumer, to provide a reconstituted (meat replacer) product, wherein the reconstituted product preferably comprises at least 5 wt.% of a structured aqueous phase containing a combination of patatin and legume seed globulin, said structured aqueous phase containing:
- 60-94 wt.% water;
- 1-15 wt.% of denatured patatin;
- 1-15 wt.% of legume seed globulin selected from 7S globulin, 11S globulin and combinations thereof;
wherein the combination of denatured patatin and the legume seed globulin is present in the structured aqueous phase in a concentration of at least 5 wt%.

Reconstitutable products are well known products in the supermarkets also sometimes referred to as instant products. Typically, these products are containers or sachets of dry powders, granules and flakes. Before use the consumer typically adds a liquid according the directions for use to make the reconstituted product - sometimes under the application of heat. The reconstituted product -if needed after cooking/cooling - will be consumed. Examples of instant products include sachets of instant soup, instant desserts or even powdered eggs. In the present case, the reconstitutable product meat replacer product will preferably be sold in a powder, granule and/or flake form. The consumer typically will be instructed on the packaging to add water or another liquid to make the reconstituted meat replacer. Often this will have the consistency of minced meat or a dough. The consumer may then form patties or balls for cooking e.g. grilling, frying to prepare vegetarian burgers or meat balls.

Preferably, the reconstitutable edible composition (i.e. meat replacer product) is packaged together with instructions to the consumer to add an aqueous liquid, e.g. water, to provide a meat replacer product as defined herein.

Preferably, 10 to 60 parts by weight reconstitutable meat replacer product are mixed with 40 to 90 parts by weight water, more preferably, 30 to 50 parts by weight reconstitutable meat replacer product are mixed with 50 to 70 parts by weight water.

The reconstitutable meat replacer product is preferably combined with an aqueous liquid to provide a (reconstituted) meat replacer product. The reconstituted meat replacer product is, for example, a dough-like mass that can be shaped into balls, patties or other shapes, or that may be stuffed into a sausage casing. After shaping or stuffing, the meat replacer product may be heated to denature the patatin and to thereby 'set' the product.

Preferably, the reconstitutable meat replacer product comprises 2.5-25 wt.%, more preferably 3-15 wt.% of undenatured patatin.

The reconstitutable meat replacer product preferably contains the undenatured legume seed globulin in a concentration of 2.5-25 wt.%, more preferably of 3-15 wt.%.

The combination of undenatured patatin, undenatured legume seed globulin and TVP fibres preferably constitutes at least 45 wt.%, more preferably at least 60 wt.% of the reconstitutable meat replacer product.

The water content of the reconstitutable meat replacer product preferably does not exceed 12 wt.%, more preferably it does not exceed 10 wt.%.

Yet another aspect of the invention relates to a method of preparing an edible composition as described herein before, said method comprising combining an aqueous liquid with (i) undenatured patatin and (ii) undenatured legume seed globulin selected from undenatured 7S globulin, undenatured 11S globulin and combinations thereof, followed by heating to a temperature of at least 55°C, more preferably of at least 65°C, even more preferably of at least 75°C, and most preferably of at least 85°C.

The heating is preferably sufficient to denature at least 30 wt.%, more preferably at least 60 wt.% and most preferably at least 80 wt.% of the undenatured legume seed globulin.

The heating step of the present method preferably denatures at least 60 wt.%, more preferably at least 80 wt.% and most preferably at least 90 wt.% of the undenatured patatin.

According to a particularly preferred embodiment, the aqueous liquid is combined with the undenatured legume seed globulin and the undenatured patatin to produce a protein solution having a pH in the range of 6.0 to 8.5. More preferably, the protein solution has a pH in the range of 6.1 to 8.0, most preferably in the range of 6.2 to 7.5

According to another preferred embodiment, oil is preferably mixed prior to addition of the aqueous liquid, together with the aqueous liquid, or admixed after addition of the aqueous liquid to the undenatured patatin and undenatured legume seed globulin (the protein solution). Preferably, oil is mixed into the protein solution.

According to a preferred embodiment, the undenatured legume seed globulin is provided in the form of a protein isolate containing at least 50 wt.%, more preferably at least 70 wt.% and most preferably at least 85 wt.% of undenatured legume seed globulin selected from undenatured 7S globulin, undenatured 11S globulin and combinations thereof.

Patatin is preferably provided in the form of a protein isolate containing at least 50 wt.%, more preferably at least 70 wt.% and most preferably at least 90 wt.% patatin.

A particularly preferred embodiment of the present method is a method of preparing a meat replacer product, said method comprising the step of introducing TVP fibres as defined herein before, prior to the heating step.

The invention is further illustrated by the following non-limiting examples.

### EXAMPLES

### Example 1

Aqueous protein solutions having a protein content of 10 wt.% were prepared, on the basis of the recipes shown in Table 1. Subsequently the G' (elastic modulus) of samples of these protein solutions was measured after the protein solutions had been heated to 90°C.

The protein solutions were prepared in a plastic container (polypropylene, dimensions: height 70 mm diameter 50 mm, VWR International, USA). Demineralised water was introduced into the container together with a magnetic stirring bar. While stirring, protein powders were added and stirred until fully dispersed.

Rheological data were obtained using a TA Instrument AR 2000ex rheometer (ex TA Instruments). The samples were measured using a temperature-controlled sandblasted bottom plate geometry and a sandblasted plate probe with a diameter of 40 mm. The material properties were measured between the two plates, with a measurement gap of 1 mm. Data were collected using the following procedure:
• One milliliter of solution was placed on the sandblasted bottom plate geometry at 20 °C. After lowering the top plate to the measuring position, the normal force was set to zero, the conditioning step normal (axial) force was set to 0.0 N, and sensitivity to 0.1N.
• The sample was then heated to 90°C, during which the viscosity was measured with a shear rate of 50 reciprocal seconds. As soon as the sample reached a viscosity of 1 Pa/s, step 1 (see below) was automatically started, followed by step 2. If the viscosity of 1 Pa/s was not reached after 6 minutes, step 2 was started manually.
∘ Step 1, time sweep: The sample was covered with a thin layer of mineral oil (light white mineral oil, catalog number 100512-700, Amresco Inc., Ohio, USA) to prevent evaporation and drying out of the sample. The visco-elastic properties of the sample were measured by oscillating the plate at a frequency of 1 Hz and a strain of 0.1% at 90°C for 10min.
∘ Step 2, temperature ramp was initiated to lower the temperature of the setup from 90°C to 20°C at a rate of 5°C/min, at an oscillatory measurement strain of 0.1%, and a frequency of 1 Hz. At 20°C an additional 5 minutes equilibration was allowed and 20 min after initiating step 2, the G' was recorded. All protein preparations were measured in duplicate and the results are summarized in Table 1.

**Table 1**

| **Wt.% potato protein¹** | **Wt.% pea protein²** | **G' (Pa ± SD, n = 2)** |
|---|---|---|
| 1 | 0 | 1 ± 0 |
| 0 | 9 | 10 ± 2 |
| 1 | 9 | 285 ± 91 |
| 2 | 0 | 3 ± 0 |
| 0 | 8 | 4 ± 2 |
| 2 | 8 | 586 ± 11 |
| 3 | 0 | 5 ± 0 |
| 0 | 7 | 0.4 ± 0 |
| 3 | 7 | 844 ± 36 |
| 4 | 0 | 158 ± 6 |
| 0 | 6 | 0.3 ± 0.2 |
| 4 | 6 | 1671 ± 497 |
| 5 | 0 | 445 ± 6 |
| 0 | 5 | 0.2 ± 0 |
| 5 | 5 | 2311 ± 104 |
| 6 | 0 | 1411 ± 94 |
| 0 | 4 | 0.1 ± 0 |
| 6 | 4 | 4874 |
| 7 | 0 | 2845 ± 50 |
| 0 | 3 | 0 ± 0 |
| 7 | 3 | 5724 ± 13 |
| 8 | 0 | 5484 ± 285 |
| 0 | 2 | 0 ± 0 |
| 8 | 2 | 8814 ± 775 |
| 9 | 0 | 8884 ± 158 |
| 0 | 1 | 0 ± 0 |
| 9 | 1 | 10914 ± 307 |
| ¹ Solanic^{®} 200, ex Avebe | | |
| ² Nutralys^{®} S85F, ex Roquette | | |

### Example 2

The structuring properties of thermally treated aqueous solutions of pea and potato protein were compared to those of thermally treated aqueous solutions of soy and wheat protein (gluten). The following protein materials were used:

| | |
|---|---|
| • Potato protein: | Solanic^{®} 200, ex Avebe |
| • Pea protein: | Nutralys^{®} S85F, ex Roquette |
| • Soy protein: | Soy Protein Isolate (SPI), ex Bulkpowder |
| • Wheat protein: | Vital Wheat Gluten, ex Roquette |

Aqueous protein solutions were prepared on the basis of the recipes shown in Table 2, and the G' was measured following heat treatment as described in Example 1. The results of the measurements are also shown in Table 2.

**Table 2**

| **Wt. %** | | | | **G' (Pa ± SD, n=2)** |
|---|---|---|---|---|
| **potato protein** | **pea protein** | **wheat protein** | **soy protein** | |
| 0 | 0 | 1 | 9 | 6 ± 4 |
| 1 | 9 | 0 | 0 | 285 ± 91 |
| 0 | 0 | 3 | 7 | 14 ± 7 |
| 3 | 7 | 0 | 0 | 544 ± 36 |
| 0 | 0 | 5 | 5 | 9 ± 4 |
| 5 | 5 | 0 | 0 | 2311 ± 104 |
| 0 | 0 | 7 | 3 | 14 ± 1 |
| 7 | 3 | 0 | 0 | 5724 ± 13 |
| 0 | 0 | 9 | 1 | 38 ± 15 |
| 9 | 1 | 0 | 0 | 10914 ± 307 |

### Example 3

The structuring properties of thermally treated aqueous solutions of pea and potato protein were compared to those of thermally treated aqueous solutions of soy and wheat protein (gluten), using the same protein materials as in Example 2, but at higher protein concentrations than in Example 2.

300 gram protein solutions were prepared on the basis of the recipes shown in Table 3 by dispersing the proteins in water and stirring for 30 minutes using a magnetic bar. Then, each solution was evenly distributed over 4 plastic containers (polypropylene, dimensions: height 70mm diameter 50mm, supplier: VWR International, USA), the caps were closed and the containers were placed in an orbital incubator shaker (Innova 40 Incubator Shaker, New

Brunswick Scientific, USA) at ambient. Subsequently the shaker was set at 180 rpm and over 75 minutes the temperature was allowed to reach 85°C. The samples where then transferred to a 95°C water bath and incubated for another 30 minutes. Samples were allowed to cool to ambient overnight.

Texture analysis was performed using a Brookfield LFRA Texture Analyser (Massachusetts, USA) equipped with a cylindrical probe (probe diameter = 6.35 mm; probe speed = 2 mm/s; maximum deformation = 25 mm) and maximum load was recorded in grams (known as Stevens value). The pea/protein gel was penetrated 4 times at different spots in each of the 4 containers (16 measurements) and the results were averaged. The soy-gluten samples were still fully liquid and therefore no Stevens value could be obtained. The results of the measurements are shown in Table 3.

**Table 3**

| **Wt.%** | | | | **Stevens value in grams** |
|---|---|---|---|---|
| **potato protein** | **pea protein** | **wheat protein** | **soy protein** | |
| 0 | 0 | 8.5 | 8.5 | n.a. |
| 8.5 | 8.5 | 0 | 0 | 466 ± 10 |

### Example 4

Meat replacer sausages were prepared comprising pea and potato protein, using the recipe shown in Table 4.

**Table 4**

| **Ingredients** | **Wt.%** |
|---|---|
| Water | 63 |
| Pea protein | 10 |
| Potato protein | 8 |
| Pea fiber | 1 |
| Rapeseed-oil | 15 |
| Herbs | 1 |
| Salt | 2 |
| Total | 100 |
| ¹ Nutralys^{®} S85F, ex Roquette | |
| ² Solanic^{®} 200, ex Avebe | |
| ³ Nutralys^{®} I50M, ex Roquette | |

Water was added to the stainless steel bowl of a Stephan Cutter Mixer (Model UMC5, Schwarzenbek, GERMANY). The pea protein, potato protein, and pea fibres were weighed and mixed and added on top of the water. The mixer was then closed and a 90% vacuum was applied. Subsequently, the content was sheared for 5 minutes at 1000 rpm (two blade cutter knives), while the wall scraper speed was set at 55 rpm. Then the vacuum was released, the remaining ingredients were added, a 90% vacuum was applied once more, and the mass was sheared with the cutter knives for another 3 minutes at a 300 rpm. The resulting dough was transferred into a plastic piping bag and then extruded into a cellulose casing (30 mm diameter 'Regular Nojax^{®}', Viskase, Illinois, USA), which was pre-soaked in water for 10 minutes. The sausage was simmered and pasteurized in 90°C water for 45 minutes and then stored at 5°C.

### Example 5

Vegetarian meat balls were prepared on the basis of the recipe that is shown in Table 5, using pea protein and potato protein in different weight ratios (1:9 to 9:1).

**Table 5**

| **Ingredients** | **Wt.%** |
|---|---|
| Hydrated texturised pea protein¹ | 42.0 |
| Water | 40.0 |
| Pea protein and potato protein² | 5.5 |
| Pea fibre³ | 1.5 |
| Rapeseed-oil | 8.0 |
| Herb mix | 1.0 |
| Salt | 2.0 |
| Total | 100.0 |
| ¹ Nutralys^{®} T65M, ex Roquette (hydrated fibres contain appr. 30 wt.% water) | |
| ² Nutralys^{®} S85F, ex Roquette in combination with Solanic^{®} 200, ex Avebe | |
| ³ Nutralys^{®} I50M, ex Roquette | |

The vegetarian meat balls were prepared by first hydrating the texturized pea protein. A binder solution was prepared by first mixing the pea protein isolate and potato protein isolate and pea fibres powders, and then dispersing them into the water with an orbital mixer (Kenwood Cooking Chef Major, model KM08, UK) at maximum speed for 1 minute, using a whisk assesory. This was followed by emulsification of the oil for 1 minute at maximum speed. Next, the hydrated texturized pea protein, the binder solution, and the herb mix were mixed in the mixer using a K-beater accessory for 3 minutes at speed 1. The resulting dough was hand shaped into spherical balls of 15 ± 0.2 gram in weight, having a diameter of approximately 3 cm. The balls were simmered for 10 minutes at 90°C in a water bath. Next, the balls were allowed to cool for 10 minutes at ambient and were air-tight sealed in a transparent polyethylene bag and stored overnight at 5°C.

The next day the vegetarian meat balls were allowed to adjust to ambient temperature over 3 hours. Then 8 balls per formulation were individually subjected to a 50% strain compression test (using a 30 mm diameter ball this is about 15 mm probe travel) using a texture analyser (TA.XT Plus, Texture Technologies, Scarsdale, NY) fitted with a 5 cm diameter Perspex compression probe. The probe approached the sample at a speed of 5 mm/s and compressions force was recorded after sensing more than 5 gram force (at a rate of 25 measurements per second). Table 6 shows the onset of breakage and the average compression forces at which balls broke. The 'break force' is defined as the first event when a recorded compression value is lower than the previous value.

**Table 6**

| **Pea to potato protein ratio** | **Average distance travelled upon breaking (mm ± SD, n=8)** | **Average break force (g ± SD, n=8)** |
|---|---|---|
| 9 to 1 | 7.40 ± 80.62 | 1605 ± 86 |
| 8 to 2 | 8.10 ± 0.67 | 2070 ± 103 |
| 7 to 3 | 8.68 ± 0.73 | 2525 ± 88 |
| 6 to 4 | 9.10 ± 0.40 | 3072 ± 211 |
| 5 to 5 | 9.18 ± 0.38 | 3230 ± 137 |
| 4 to 6 | 10.35 ± 0.76 | 3906 ± 188 |
| 3 to 7 | 10.38 ± 0.23 | 4151 ± 346 |
| 2 to 8 | 10.43 ± 0.80 | 4372 ± 341 |
| 1 to 9 | 10.61 ± 0.66 | 4643 ± 265 |

### Example 6

The vegetarian meat balls of Example 5 were put into 750 ml glass jars (14 balls per jar) together with 500 g acidic sauce (Bertolli Basilico tomato sauce, ex. Unilever) and sterilized in a pressure cooker at 120°C for 20 minutes. The jars were left to cool at ambient overnight. The pH of the sauce was around 5.

The firmness of the balls was measured in the same way as in Example 5, except that this time the compression force to deform balls up to 5 mm (n=14) was recorded. The results are shown in Table 7.

**Table 7**

| **Pea to potato protein ratio** | **Average compression force at 5 mm deformation (g ± SD, n=14)** |
|---|---|
| 9 to 1 | 620 ± 138 |
| 8 to 2 | 726 ± 60 |
| 7 to 3 | 891 ± 121 |
| 6 to 4 | 1106 ± 156 |
| 5 to 5 | 1184 ± 230 |
| 4 to 6 | 1221 ± 191 |
| 3 to 7 | 1308 ± 275 |
| 2 to 8 | 1563 ± 310 |
| 1 to 9 | 1613 ± 284 |

### Example 7

The vegetarian meat balls of Example 6 were heated in a water bath to 60°C and evaluated by an expert panel. It was found that increasing the potato protein to pea protein ratio changed the mouthfeel from soft to firm, and from juicy to dry, while increasing in elasticity/bite. The preferred balance between juicy appearance, juicy mouthfeel, firmness, bite, and good shaping of doughs into balls was seen for balls with a pea:potato protein range between 6:4 and 4:6.

### Example 8

A reconstitutable vegetarian meat replacer mix was prepared on the basis of the recipe that is shown in Table 5 of Example 5, with a pea:potato protein ratio of 1:1. The reconstitutable mix was prepared by first mixing all powders together (dry texturized pea protein, pea protein, potato protein, pea fibre, herb mix, and salt), until a homogeneous mass was obtained, and then the oil was mixed in.

Meat replacer products could be made from this reconstitutable mix by combining 48 parts by weight of reconstitutable mix with 52 parts by weight of water, mixing the ingredients until a coherent mass was obtained, and then hand shaping the dough into balls, patties, or other shapes.

The shaped (reconstituted) meat replacer doughs can be cooked by simmering in a sauce or water close to boiling, by pan frying, deep frying, oven steaming, oven baking, sterilising them in a sauce, and combinations thereof. A preferred industrial cooking method is to deep fry the shaped meat replacer pieces for 10 to 60 seconds, followed by oven steaming, addition of the steamed pieces to a sauce, and pasteurisation or sterilisation. Another preferred industrial cooking method is to simmer the shaped meat replacer pieces for 10 minutes in water close to boiling, followed by addition of the simmered pieces to a sauce and pasteurisation or sterilisation.

### Example 9

Vegetarian meat balls were prepared as described in Example 4, using pea protein and potato protein in a weight ratio of 1:1. The dough was hand shaped into 11 gram balls and split in 2 batches of 15 balls.

One batch of balls was fried for one minute and the other for five minutes, in rapeseed oil at 175°C, and both batches were steamed for 10 minutes in a steam pan (a stainless-steel pan with a mesh bottom and a stainless-steel lid, placed above a stainless steel pan with boiling water).

Table 8 summarizes the weight of the two batches (of 15 balls each): before frying, after frying, and after steaming.

**Table 8**

| | **Total weight (in grams)** | | |
|---|---|---|---|
| | **Before frying** | **After frying** | **After steaming** |
| 1 minute frying | 165.6 | 161.3 | 169.6 |
| 5 minutes frying | 163.5 | 136.1 | 143.2 |

After this, both batches were sterilized in tomato sauce as described in Example 6. The balls fried for 5 minutes absorbed far more water from the sauce, which thickened the sauce and made it look more processed/darker in colour.

### Example 10

Protein solutions with different salt (NaCl) contents were prepared on the basis of the recipes shown in Table 9.

**Table 9**

| **Ingredients** | **wt.%** | | | |
|---|---|---|---|---|
| Demineralised water | 83.0 | 82.0 | 80.0 | 78.0 |
| Pea protein¹ | 8.5 | 8.5 | 8.5 | 8.5 |
| Potato protein² | 8.5 | 8.5 | 8.5 | 8.5 |
| NaCl | 0.0 | 1.0 | 3.0 | 5.0 |
| Total | 100.0 | 100.0 | 100.0 | 100.0 |
| ¹ Nutralys^{®} S85F, ex Roquette | | | | |
| ² Solanic^{®} 200, ex Avebe | | | | |

Using the procedure that is described in Example 3, the protein solutions were heat treated and cooled to ambient temperature, following which the Stevens values was measured, again in the same way as described in Example 3.

The results are shown in Table 10

**Table 10**

| **wt.% NaCl** | **Stevens values (g ± SD)** |
|---|---|
| 0 | 472 ± 39 |
| 1 | 429 ± 10 |
| 3 | 447 ± 20 |
| 5 | 423 ± 43 |

### Example 11

Vegetarian meat balls were prepared, on the basis of the recipe that is shown in Table 11. The meat replacer balls were prepared as explained in Example 5

**Table 11**

| **Ingredients** | **Wt.%** |
|---|---|
| Hydrated texturised pea protein¹ | 40.0 |
| Water | 40.0 |
| Pea protein² | 3.0 |
| Potato protein³ | 3.0 |
| Wheat and Psyllium fibre⁴ | 3.0 |
| Rapeseed oil | 8.0 |
| Herb mix | 1.0 |
| Salt | 2.0 |
| Total | 100.0 |
| ¹ Nutralys^{®} T65M, ex Roquette (hydrated fibres contain appr. 30 wt.% water) | |
| ² Nutralys^{®} S85F, ex Roquette | |
| ³ Solanic^{®} 200, ex Avebe | |
| ⁴ Vitacel ME107, ex Rettenmaier. Wheat fibre is cellulose from stem material and Psyllium fibre is from husk | |

## Claims

1. An edible composition comprising at least 5 wt.% of a structured aqueous phase containing a combination of patatin and legume seed globulin, said structured aqueous phase containing;
• 60-94 wt.% water;
• 1-15 wt.% of denatured patatin;
• 1-15 wt.% of legume seed globulin selected from 7S globulin, 11S globulin and combinations thereof;
wherein the combination of denatured patatin and the legume seed globulin is present in the structured aqueous phase in a concentration of at least 5 wt.%.

2. Edible composition according to claim 1, wherein the denatured patatin and the legume seed globulin are present in a weight ratio of 4:1 to 1:4.

3. Edible composition according to claim 1 or 2, wherein the structured aqueous phase contains 0.1-15 wt.% dissolved alkali chloride salt.

4. Edible composition according to any one of the preceding claims, wherein the structured aqueous phase constitutes 10-100 wt.% of the edible composition.

5. Edible composition according to any one of the preceding claims, wherein the edible composition contains 1-82 wt.% of fat phase.

6. Edible composition according to any one of the preceding claims, wherein the structured aqueous phase has a pH in the range of 6.0 to 8.5.

7. Edible composition according to any one of the preceding claims, wherein the structured aqueous phase contains 0.1-20% legume seed albumin by weight of legume seed globulin.

8. Edible composition according to any one of the preceding claims, wherein the legume seed globulin is pea globulin.

9. Edible composition according to any one of the preceding claims, wherein the denatured patatin is denatured potato patatin.

10. Edible composition according to any one of the preceding claims, wherein the edible composition is a meat replacer product, said meat replacer product containing 30-65 wt.% of the structured aqueous phase and 10-70 wt.% of hydrated textured vegetable protein fibres, said hydrated textured vegetable protein fibres containing 40-90 wt.% of plant protein and 20-75 wt.% water, said plant protein preferably being selected from pea protein, lupin protein, rice protein, wheat protein (gluten), and combinations thereof.

11. A reconstitutable meat replacer product comprising, by weight of the reconstitutable meat replacer product:
• 2-35 wt.% of undenatured patatin;
• 2-35 wt.% of undenatured legume seed globulin selected from 7S globulin, 11S globulin and combinations thereof;
• 20-65 wt.% textured vegetable protein fibres;
• 5-50 wt.% oil;
• 2-12 wt.% salt; and
• 0-15 wt.% water.

12. A method of preparing an edible composition according to any one of claims 1-10, said method comprising combining an aqueous liquid with (i) undenatured patatin and (ii) undenatured legume seed globulin selected from undenatured 7S globulin, undenatured 11S globulin and combinations thereof, followed by heating to a temperature of at least 55°C.

13. Method according to claim 12, wherein the undenatured legume seed globulin is provided in the form of a protein isolate containing at least 50 wt.% of undenatured legume seed globulin selected from undenatured 7S globulin, undenatured 11S globulin and combinations thereof.

14. Method according to claim 12 or 13, wherein the patatin is provided in the form of a protein isolate containing at least 50 wt.% patatin.

## Patentansprüche

1. Essbare Zusammensetzung, umfassend mindestens 5 Gew.-% einer strukturierten wässrigen Phase, enthaltend eine Kombination aus Patatin und Leguminosensamenglobulin, wobei die strukturierte wässrige Phase enthält:
• 60 - 94 Gew.-% Wasser;
• 1 - 15 Gew.-% denaturiertes Patatin;
• 1 - 15 Gew.-% Leguminosensamenglobulin, ausgewählt unter 7S-Globulin, 11S-Globulin und Kombinationen davon;
wobei die Kombination von denaturiertem Patatin und dem Leguminosensamenglobulin in der strukturierten wässrigen Phase in einer Konzentration von mindestens 5 Gew.-% vorliegt.

2. Essbare Zusammensetzung nach Anspruch 1, wobei das denaturierte Patatin und das Leguminosensamenglobulin in einem Gewichtsverhältnis von 4:1 bis 1:4 vorliegen.

3. Essbare Zusammensetzung nach Anspruch 1 oder 2, wobei die strukturierte wässrige Phase 0,1 - 15 Gew.-% gelöstes Alkalichloridsalz enthält.

4. Essbare Zusammensetzung nach irgendeinem der vorhergehenden Ansprüche, wobei die strukturierte wässrige Phase 10 - 100 Gew.-% der essbaren Zusammensetzung ausmacht.

5. Essbare Zusammensetzung nach irgendeinem der vorhergehenden Ansprüche, wobei die essbare Zusammensetzung 1 - 82 Gew.-% Fettphase enthält.

6. Essbare Zusammensetzung nach irgendeinem der vorhergehenden Ansprüche, wobei die strukturierte wässrige Phase einen pH-Wert in dem Bereich von 6,0 bis 8,5 aufweist.

7. Essbare Zusammensetzung nach irgendeinem der vorhergehenden Ansprüche, wobei die strukturierte wässrige Phase 0,1 - 20% Leguminosensamenalbumin, bezogen auf das Gewicht des Leguminosensamenglobulins, enthält.

8. Essbare Zusammensetzung nach irgendeinem der vorhergehenden Ansprüche, wobei das Leguminosensamenglobulin Erbsenglobulin ist.

9. Essbare Zusammensetzung nach irgendeinem der vorhergehenden Ansprüche, wobei das denaturierte Patatin denaturiertes Kartoffelpatatin ist.

10. Essbare Zusammensetzung nach irgendeinem der vorhergehenden Ansprüche, wobei die essbare Zusammensetzung ein Fleischersatzprodukt ist, wobei das Fleischersatzprodukt 30 - 65 Gew.-% der strukturierten wässrigen Phase und 10 - 70 Gew.-% hydratisierte texturierte pflanzliche Proteinfasern enthält, wobei die hydratisierten texturierten pflanzlichen Proteinfasern 40 - 90 Gew.-% Pflanzenprotein und 20 - 75 Gew.-% Wasser enthalten, wobei das Pflanzenprotein vorzugsweise unter Erbsenprotein, Lupinenprotein, Reisprotein, Weizenprotein (Gluten) und Kombinationen davon ausgewählt ist.

11. Rekonstituierbares Fleischersatzprodukt, umfassend, bezogen auf das Gewicht des rekonstituierbaren Fleischersatzprodukts:
• 2 - 35 Gew.-% nicht-denaturiertes Patatin;
• 2 - 35 Gew.-% nicht-denaturiertes Leguminosensamenglobulin, ausgewählt unter 7S-Globulin, 11S-Globulin und Kombinationen davon;
• 20 - 65 Gew.-% texturierte pflanzliche Proteinfasern;
• 5 - 50 Gew.-% Öl;
• 2 - 12 Gew.-% Salz; und
• 0 - 15 Gew.-% Wasser.

12. Verfahren zur Herstellung einer essbaren Zusammensetzung nach irgendeinem der Ansprüche 1 - 10, wobei das Verfahren das Kombinieren einer wässrigen Flüssigkeit mit (i) nicht-denaturiertem Patatin und (ii) nicht-denaturiertem Leguminosensamenglobulin, ausgewählt unter nicht-denaturiertem 7S-Globulin, nicht-denaturiertem 11S-Globulin und Kombinationen davon, umfasst, gefolgt vom Erhitzen auf eine Temperatur von mindestens 55°C.

13. Verfahren nach Anspruch 12, wobei das nicht-denaturierte Leguminosensamenglobulin in Form eines Proteinisolats bereitgestellt wird, das mindestens 50 Gew.-% nicht-denaturiertes Leguminosensamenglobulin, ausgewählt unter nicht-denaturiertem 7S-Globulin, nicht-denaturiertem 11S-Globulin und Kombinationen davon, enthält.

14. Verfahren nach Anspruch 12 oder 13, wobei das Patatin in Form eines Proteinisolats, das mindestens 50 Gew.-% Patatin enthält, bereitgestellt wird.

## Revendications

1. Composition comestible comprenant au moins 5 % en masse d'une phase aqueuse structurée contenant une combinaison de patatine et globuline de graine de légumineuse, ladite phase aqueuse structurée contenant;
• 60-94 % en masse d'eau;
• 1-15 % en masse de patatine dénaturée;
• 1-15 % en masse de globuline de graine de légumineuse choisie parmi la globuline 7S, globuline 11S et des combinaisons de celles-ci ;
dans laquelle la combinaison de patatine dénaturée et de la globuline de graine de légumineuse est présente dans la phase aqueuse structurée dans une concentration d'au moins 5 % en masse.

2. Composition comestible selon la revendication 1, dans laquelle la patatine dénaturée et la globuline de graine de légumineuse sont présentes dans un rapport de masse de 4:1 à 1:4.

3. Composition comestible selon la revendication 1 ou 2, dans laquelle la phase aqueuse structurée contient 0,1-15 % en masse de sel de chlorure d'alcali dissous.

4. Composition comestible selon l'une quelconque des revendications précédentes, dans laquelle la phase aqueuse structurée constitue 10-100 % en masse de la composition comestible.

5. Composition comestible selon l'une quelconque des revendications précédentes, dans laquelle la composition comestible contient 1-82 % en masse de phase de graisse.

6. Composition comestible selon l'une quelconque des revendications précédentes, dans laquelle la phase aqueuse structurée présente un pH dans l'intervalle de 6,0 à 8,5.

7. Composition comestible selon l'une quelconque des revendications précédentes, dans laquelle la phase aqueuse structurée contient 0,1-20 % d'albumine de graine de légumineuse en masse de globuline de graine de légumineuse.

8. Composition comestible selon l'une quelconque des revendications précédentes, dans laquelle la globuline de graine de légumineuse est de la globuline de pois.

9. Composition comestible selon l'une quelconque des revendications précédentes, dans laquelle la patatine dénaturée est de la patatine de pomme de terre dénaturée.

10. Composition comestible selon l'une quelconque des revendications précédentes, dans laquelle la composition comestible est un produit de remplacement de la viande, ledit produit de remplacement de la viande contenant 30-65 % en masse de la phase aqueuse structurée et 10-70 % en masse de fibres de protéine végétale texturée hydratée, lesdites fibres de protéine végétale texturée hydratée contenant 40-90 % en masse de protéine végétale et 20-75 % en masse d'eau, ladite protéine végétale étant de préférence choisie parmi la protéine de pois, protéine de lupin, protéine de riz, protéine de blé (gluten), et des combinaisons de celles-ci.

11. Produit de remplacement de la viande reconstituable comprenant, en masse du produit de remplacement de la viande reconstituable:
• 2-35 % en masse de patatine non dénaturée;
• 2-35 % en masse de globuline de graine de légumineuse non dénaturée choisie parmi la globuline 7S, globuline 11S et des combinaisons de celles-ci;
• 20-65 % en masse de fibres de protéine végétale texturée;
• 5-50 % en masse d'huile;
• 2-12 % en masse de sel; et
• 0-15 % en masse d'eau.

12. Procédé de préparation d'une composition comestible selon l'une quelconque des revendications 1-10, le procédé comprenant la combinaison d'un liquide aqueux avec (i) de la patatine non dénaturée et (ii) de la globuline de graine de légumineuse non dénaturée choisie parmi la globuline 7S non dénaturée, globuline 11S non dénaturée et des combinaisons de celles-ci, suivie par le chauffage à une température d'au moins 55°C.

13. Procédé selon la revendication12, dans lequel la globuline de graine de légumineuse non dénaturée est fournie dans la forme d'un isolat de protéine contenant au moins 50 % en masse de globuline de graine de légumineuse non dénaturée choisie parmi la globuline 7S non dénaturée, globuline 11S non dénaturée et des combinaisons de celles-ci.

14. Procédé selon la revendication 12 ou 13, dans lequel la patatine est fournie dans la forme d'un isolat de protéine contenant au moins 50 % en masse de patatine.
